# EUROPEAN PATENT APPLICATION

(11) **EP 4 339 310 A1**
(43) Date of publication of application: **20.03.2024**
(21) Application number: 22801000.5
(22) Date of filing: 14.03.2022
(51) Int. Cl.: C22B 1/02, C22B 5/02, C22B 7/00, C22B 26/12, C22B 47/00, H01M 10/54

(54) **METHOD FOR PRODUCING VALUABLE METAL**

(30) Priority: 12.05.2021 JP 2021081039
(71) Applicant: SUMITOMO METAL MINING CO., LTD., Tokyo 105-8716 (JP)
(72) Inventor: HAGIO, Tomoya, Niihama-shi, Ehime 792-0002 (JP); YAMASHITA, Yu, Niihama-shi, Ehime 792-0002 (JP)
(74) Representative: Jones, Nicholas Andrew
(86) International application number: PCT/JP2022/011406
(87) International publication number: WO 2022/239454

(57) **Abstract**

Provided is a method for producing valuable metal from raw materials including, for example, waste lithium ion batteries by a pyrometallurgical method, said method making it possible to efficiently separate manganese included in the raw materials from metal into slag without lowering the valuable metal recovery rate. The present invention is a method for producing valuable metal from raw materials including at least lithium, manganese, and the valuable metal, said method comprising: a reduction melting step for subjecting the raw materials to a reduction melting process so as to obtain a reduction product containing slag and molten metal that contains valuable metal; a slag separation step for recovering the molten metal from the reduction product; and an oxidation purification step for adding silicon dioxide (SiO₂) as flux to the recovered molten metal and performing an oxidation melting process. In the oxidation purification step, SiO₂ is added as the flux such that the SiO₂/MnO weight ratio is 0.4-1.0 in the slag.

## Description

### TECHNICAL FIELD

The present invention relates to a method for producing a valuable metal from a raw material, such as a discarded lithium ion battery.

### BACKGROUND ART

Recently, lithium ion batteries have become popular as secondary batteries which are light and have large output. As a lithium ion battery, a battery has been known that includes an outer case made of a metal such as aluminum or iron, in which a negative electrode material including a negative electrode current collector having a copper foil and a negative electrode active material, such as graphite, bonded to the current collector; a positive electrode material including a positive electrode current collector having an aluminum foil and a positive electrode active material, such as lithium nickelate or lithium cobaltate, bonded to the current collector; a separator including, for example, a porous organic resin film made of polypropylene; and an electrolytic solution containing an electrolyte such as lithium hexafluorophosphate (LiPF₆), are sealed.

One of the main applications of lithium ion batteries includes hybrid cars and electric vehicles, and it is expected that a large amount of lithium ion batteries are likely to be discarded in the future during and the end of the lifecycles of the vehicles. Many proposals have been made to reuse, as a resource, such used batteries and defective lithium ion batteries occurring in the production process (hereinafter such batteries will be collectively referred to as "discarded lithium ion batteries"). For example, as a recycling method of discarded lithium ion batteries, a pyrometallurgical method is proposed, in which discarded lithium ion batteries are melted in a high-temperature furnace and valuable metals such as nickel (Ni), cobalt (Co), and copper (Cu) are recovered as a metal (hereinafter also referred to as "alloy") while controlling oxidation and reduction.

In a case where the valuable metal is recovered from a raw material containing a discarded lithium ion battery by the pyrometallurgical method, when a manganese (Mn) rich raw material is treated as the discarded lithium ion battery, much of the manganese may be distributed to a metal to be recovered. In such a case, although it is possible to oxidatively remove the manganese in a subsequent oxidative purification step, there is a problem that viscosity of a slag increases due to solid MnO generated by the oxidation treatment, whereby metal is entrained, resulting in an increase in metal loss, which decreases a recovery rate of the valuable metal.

For example, Patent Document 1 discloses a method of recovering a valuable metal from discarded lithium ion batteries, in which a preliminary oxidation step of performing oxidation treatment prior to a pyrometallurgical step is provided, thereby enabling stable control of a degree of oxidation in a melting step, and thus enabling stable recovery of the valuable metal at a high recovery rate, which had been difficult. However, there is no mention of a method for separating Mn from a molten metal when Mn is contained in a molten metal obtained in the melting step. Citation List

### Patent Document

Patent Document 1: Japanese Unexamined Patent Application, Publication No. 2012-172169

### DISCLOSURE OF THE INVENTION

### Problems to be Solved by the Invention

The present invention has been proposed in view of the above circumstances, and it is an object of the present invention to provide a method of producing a valuable metal from a raw material including, for example, a discarded lithium ion battery by the pyrometallurgical method, the production method being capable of efficiently separating manganese which was contained in the raw material from the metal to the slag, without lowering a recovery rate of the valuable metal.

### Means for Solving the Problems

The present inventors have intensively studied to solve the above-mentioned problems. As a result, the inventors have found that, by adding silicon dioxide (SiO₂) as a flux such that a weight ratio of SiO₂/MnO in the slag to be produced falls within a specific range in an oxidative purification step for removing manganese as an impurity from the molten metal obtained by a reductive melting treatment, manganese can be efficiently separated and removed while recovering the metal at a high recovery rate, thereby arriving at completion of the present invention.

A first aspect of the present invention relates to a method of producing a valuable metal from a raw material containing at least lithium, manganese, and a valuable metal, the method including: a reductive melting step of subjecting the raw material to a reductive melting treatment to obtain a reduced product containing: a slag and a molten metal containing the valuable metal; a slag separation step of recovering the molten metal from the reduced product; and an oxidative purification step of adding silicon dioxide (SiO₂) as a flux to the recovered molten metal and subjecting a resulting mixture to an oxidative melting treatment. In the oxidative purification step, SiO₂ is added as a flux such that a weight ratio of SiO₂/MnO in the slag is 0.4 or more and 1.0 or less.

A second aspect of the present invention relates to the method of producing a valuable metal as described in the first aspect, in which a manganese content contained in the raw material is 15% by mass or less.

A third aspect of the present invention relates to the method of producing a valuable metal as described in the first or second aspect, further including a preheating step of heating and oxidatively roasting the raw material, in which, in the reductive melting step, a raw material after the oxidative roasting is subjected to the reductive melting treatment.

A fourth aspect of the present invention relates to the method of producing a valuable metal as described in any one of the first to third aspects, in which the raw material includes a discarded lithium ion battery.

### Effects of the Invention

According to the present invention, it is possible to provide a method capable of efficiently separating manganese contained in the raw material from the metal to the slag without lowering the recovery rate of the valuable metal.

### BRIEF DESCRIPTION OF THE DRAWINGS

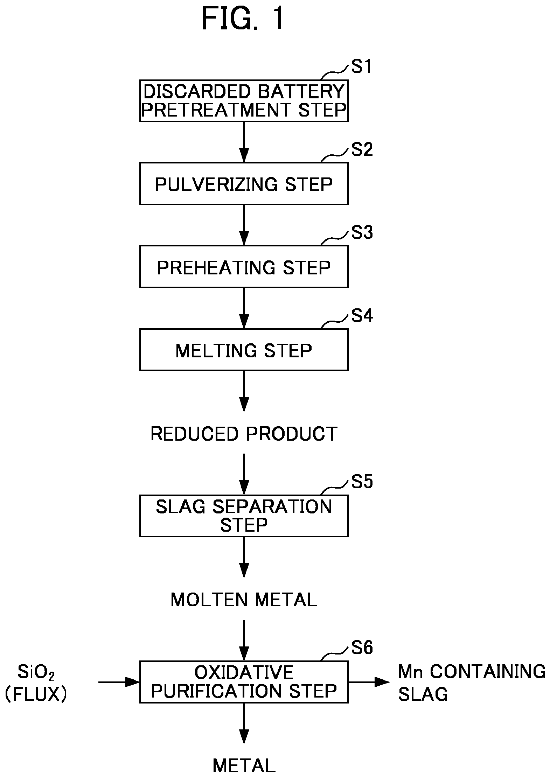

FIG. 1 is a process diagram showing an example of a flow of a production method of a valuable metal.

### PREFERRED MODE FOR CARRYING OUT THE INVENTION

Hereinafter, embodiments of the present invention (hereinafter referred to as "the present embodiment") will be described. The present invention is not limited to the following embodiments, and various modifications can be made without departing from the gist of the present invention.

### <<1. Method of Producing Valuable Metal>>

The production method of a valuable metal according to the present embodiment is a method of separating and recovering a valuable metal from a raw material containing at least lithium, manganese and a valuable metal. Therefore, the production method of a valuable metal also can be rephrased as a recovery method of a valuable metal. The method according to the present embodiment is mainly a method by a pyrometallurgical process, and may be composed of a pyrometallurgical process and a hydrometallurgical process.

As the "raw material including at least lithium, manganese, and a valuable metal", a raw material including a discarded lithium ion battery may be exemplified. The positive electrode material constituting the lithium ion battery includes an oxide of nickel and an oxide of cobalt, in addition to lithium. The term "discarded lithium ion battery" is a concept including not only a used lithium ion battery, but also a waste material in a production process of lithium ion batteries, such as a defective product generated in a production process of a positive electrode material or the like constituting the battery, a residual material in the production process, and waste generated. Therefore, the discarded lithium ion battery can also be referred to as a lithium ion battery waste material.

The "valuable metal" that can be recovered from a raw material refers to at least nickel (Ni) and cobalt (Co). For example, when the raw material is a raw material including a discarded lithium ion battery, examples of the valuable metal include, in addition to nickel and cobalt, copper (Cu) and the like. The examples further include an alloy composed of a combination of nickel, cobalt, and copper. The content of each valuable metal contained in the discarded lithium ion battery is not particularly limited. For example, copper may be contained in an amount of 10% by mass or more.

The raw material including a discarded lithium ion battery or the like contains manganese (Mn) as an impurity for the valuable metal to be separated and recovered from the raw material.

Specifically, the method of manufacturing a valuable metal according to the present embodiment includes at least a reductive melting step of subjecting a raw material to a reductive melting treatment to obtain a reduced product including a slag and a molten metal containing a valuable metal, a slag separation step of recovering the molten metal from the reduced product, and an oxidative purification step of purifying the molten metal by subjecting the recovered molten metal to an oxidative melting treatment. This method, in which silicon dioxide (SiO₂) is added as a flux in the oxidative purification step and the oxidative melting treatment is performed, is characterized in that the SiO₂ is added such that a weight ratio of SiO₂/MnO in the slag to be produced is 0.4 or more and 1.0 or less.

Manganese oxide (MnO) in "SiO₂/MnO" is a compound which is derived from manganese contained in the molten metal as an impurity, by the oxidation in the oxidative melting treatment applied to the molten metal.

As a result of research by the present inventors, it has been found that, in the oxidative purification of the molten metal containing manganese as an impurity, SiO₂ is added as a flux such that the weight ratio of SiO₂/MnO in the slag to be produced is 0.4 or more and 1.0 or less and the oxidative melting treatment is performed, whereby a MnO-SiO₂-based slag having a low melting point can be produced, resulting in suppression of an increase in the viscosity of the slag.

As a result, manganese can be effectively distributed to the slag, and metal entrainment into the slag can be reduced, thereby being able to prevent a decrease in the recovery rate of the valuable metal. Further, it is assumed that iron (Fe) is contained as an impurity in the molten metal containing manganese, but in such a case, even if the iron is contained as an oxide in the generated MnO- SiO₂-based slag, since the melting point of the slag is low, it is possible to efficiently separate manganese into the slag, and it is also possible to suppress the metal from entraining into the slag.

Here, with respect to the addition amount of SiO₂, a flux, when the addition amount is set such that the weight ratio of SiO₂/MnO is less than 0.4, the melting point of the slag produced increases. When the operating temperature is the same, the viscosity of the slag increases, and entrainment of the slag into the metal increases. Further, even when the addition amount of SiO₂ is set such that the weight ratio of SiO₂/MnO exceeds 1.0, similarly, the melting point of the generated slag increases, and when the operating temperature is the same, the viscosity of the slag increases, and the entrainment of the slag into the metal increases. In addition, due to an increase in the amount of SiO₂ added as a flux, use cost of flux increases, or slag treatment cost increases due to an increase in the amount of the slag.

According to such a method, for example, when a valuable metal is produced from a raw material including a discarded lithium ion battery by the pyrometallurgical method, manganese contained in the raw material can be efficiently separated from the metal to the slag without lowering the recovery rate of the valuable metal.

Hereinafter, the method of producing a valuable metal will be described more specifically by exemplifying a case where a raw material including a discarded lithium ion battery is used as the raw material including at least lithium, manganese, and a valuable metal.

### <<2. Regarding Steps of Production Method>>

FIG. 1 is a process diagram showing an example of a flow of a production method of a valuable metal according to the present embodiment. As shown in FIG. 1, the production method of a valuable metal includes: a discarded battery pretreatment step S1 of removing an electrolytic solution and an outer case of a discarded lithium ion battery; a pulverizing step S2 of pulverizing the contents of the battery into a pulverized product; a preheating step (also referred to as an "oxidative roasting step") S3 of preheating the pulverized product as necessary; a melting step (also referred to as "reductive melting step") S4 of subjecting the pulverized product to a reductive melting treatment to obtain a reduced product including a slag and a molten metal containing a valuable metal; a slag separation step S5 of separating the slag from the reduced product to recover the molten metal; and an oxidative purification step S6 of purifying the molten metal by subjecting the recovered molten metal to an oxidative melting treatment.

With respect to the raw material including the discarded lithium ion battery, an amount (content) of manganese contained in the raw material is preferably 15% by mass or less relative to the total amount of the raw material. A manganese content exceeding 15% by mass may increase the melting point of a CaO-Li₂O-Al₂O₃-based slag in the melting step S4 to be described later, and may increase entrainment of the valuable metal into the slag generated at this time. As a result, the recovery rate of the valuable metal at the time of obtaining the molten metal decreases. On the other hand, the lower limit of the manganese content is preferably 5% by mass or more relative to the total amount of the raw material. A manganese content less than 5% by mass may limit a treatment amount of discarded lithium ion batteries containing manganese as an impurity, which may decrease treatment efficiency.

### [Discarded Battery Pretreatment Step]

The discarded battery pretreatment step S1 is performed for a purpose of preventing explosion of the discarded lithium ion battery or making the discarded lithium ion battery harmless, by removing the outer case or the like when recovering the valuable metal from the discarded lithium ion battery.

That is, for example, a discarded lithium ion battery such as a used lithium ion battery is a closed system and has an electrolytic solution or the like therein, and therefore, if the pulverizing treatment is carried out as is, there is a risk of explosion, which is dangerous. Therefore, it is necessary to perform a discharge treatment or a treatment for removing the electrolytic solution by some means. In this way, by removing the electrolytic solution and the outer case in the discarded battery pretreatment step S1, safety can be enhanced and recovery productivity of a valuable metal such as copper, nickel, and cobalt can be increased.

Although the specific method of the pretreatment is not particularly limited, for example, by physically piercing the battery with a needle-shaped cutting edge, the electrolytic solution inside can be poured out and removed. Alternatively, the discarded lithium ion battery may be heated as is to burn the electrolytic solution, thereby making it harmless.

The outer case constituting the battery is often made of metal aluminum, iron, or the like, and by performing such pretreatment, the metallic outer case can be relatively easily recovered as a valuable metal as is. For example, in the case of collecting aluminum or iron contained in the outer case, sieving can be performed using a sieve shaker after pulverizing the removed outer case. In the case of aluminum, even if it is lightly pulverized, it becomes powder easily and can be efficiently recovered. Further, iron contained in the outer case can be recovered by sorting using magnetic force.

### [Pulverizing Step]

In the pulverizing step S2, the contents of the battery obtained through the discarded battery pretreatment step S1 are pulverized to produce a pulverized product. The treatment in the pulverizing step S2 is carried out for the purpose of increasing reaction efficiency in the subsequent or later pyrometallurgical process, which enables the recovery rate of valuable metals such as copper, nickel and cobalt to be increased.

The pulverizing method is not particularly limited, but the contents of the battery can be pulverized using a conventionally known pulverizer such as a cutter mixer.

### [Preheating Step]

By providing the preheating step S3 if necessary, the pulverized product of the discarded lithium ion battery subjected to the pulverizing step S2 can be subjected to an oxidative roasting treatment, by heating the pulverized product of the discarded lithium ion battery to a predetermined temperature. By performing the oxidative roasting treatment in the preheating step S3, impurities contained in the contents of the battery are made to evaporate or thermally decompose and to be removed.

In the preheating step S3, for example, it is preferable to perform the oxidative roasting by heating at a temperature of 700°C or higher (preheating temperature). By setting the preheating temperature to 700°C or higher, the efficiency of removing impurities contained in the battery can be increased. On the other hand, the upper limit of the preheating temperature is preferably 900°C or lower, whereby the thermal energy cost can be suppressed and the treatment efficiency can be increased.

The heating treatment is preferably performed in the presence of an oxidant. Thereby, carbon among the impurities contained in the contents of the battery can be efficiently oxidized and removed, and aluminum also can be oxidized. In particular, by oxidatively removing carbon, molten fine particles of the valuable metal locally generated in the subsequent melting step S4 can be aggregated without physical obstacles due to carbon, so that the alloy obtained as the melt can be integrated and easily recovered. Generally, the main elements constituting the discarded lithium ion battery are likely to be oxidized in the order of aluminum > lithium > carbon > manganese > phosphorus > iron > cobalt > nickel > copper due to difference in affinity with oxygen.

The oxidant is not particularly limited, but a gas containing oxygen such as air, pure oxygen, or an oxygen-enriched gas is preferably used from the viewpoint of easy handling. The amount of the oxidant to be introduced may be, for example, about 1.2 times the chemical equivalent required for oxidation of each substance to be oxidized.

### [Melting Step]

In the melting step (reductive melting step) S4, the pulverized product of the discarded lithium ion battery is melted (reductively melted) together with a flux and a reduced product composed of a molten metal containing a valuable metal and a slag is obtained. Thus, impurity elements such as aluminum come to be contained in the slag as an oxide, and phosphorus is also incorporated in the flux and comes to be contained in the slag. On the other hand, a valuable metal such as copper, which hardly forms an oxide, melts and can be recovered from the melt as an alloy integrated (molten alloy). It should be noted that the "molten alloy" refers to an alloy in a molten state", obtained from a melt.

The flux preferably contains an element which incorporates an impurity element and forms a basic oxide having a low melting point. Above all, the flux more preferably contains a calcium compound from the viewpoint of being inexpensive and stable at room temperature. Phosphorus, which is an impurity element, becomes an acid oxide when oxidized, and is more easily taken into the slag with a more basic slag formed by the melting treatment.

As the calcium compound, for example, calcium oxide or calcium carbonate may be added. As the amount of calcium to be added, since an Al₂O₃-CaO-Li₂O system is used as a slag system, it is preferable to add an appropriate amount which is sufficient for calcium to form an eutectic substance with alumina in the sample to melt the alumina, i.e., an amount giving CaO/(Al₂O₃ + CaO)=0.15 or more in weight ratio.

The melting step S4 may be performed in the presence of an oxidant or a reductant in order to appropriately adjust the degree of oxidation and degree of reduction when melting the discarded lithium ion battery.

As the oxidant, a known oxidant can be used, and a solid oxidant may be added, or a gaseous oxidant may be introduced into the furnace. As the reductant, a known reductant can be used, but a reductant containing a carbon atom is preferable. By adding a reductant containing a carbon atom to the discarded lithium ion battery, an oxide of a valuable metal, such as copper, nickel, or cobalt, contained in the discarded lithium ion battery, can be easily reduced.

Specifically, examples of the reductant containing a carbon atom include graphite capable of reducing 2 mol of an oxide of a valuable metal such as copper oxide or nickel oxide by 1 mol of carbon. Further, hydrocarbons capable of reducing 2 mol to 4 mol of valuable metal oxide per 1 mol, carbon monoxide capable of reducing 1 mol of a valuable metal oxide per 1 mol, or the like can be added as a carbon supply source. Given the above, by performing the reductive melting treatment in the presence of carbon as a reductant, it is possible to efficiently reduce a valuable metal and more effectively obtain a molten metal containing the valuable metal. Further, reduction treatment using carbon has an advantage of extremely high safety as compared with a case of using thermite reaction, in which reduction is performed using metal powder, for example, aluminum as a reductant.

When carbon is added as a reductant, an excessive amount of carbon may be added. In a case where a compound of phosphorus is contained in the discarded lithium ion battery, addition of too large amount of carbon may also reduce phosphorus, and the phosphorus may be incorporated in the molten alloy phase. However, by melting the discarded lithium ion battery in the presence of a flux while adding an oxidant where necessary, the phosphorus may be incorporated into the flux and can be removed.

The heating temperature (melting temperature) in the melting treatment is not particularly limited, but is preferably 1300°C or higher, and more preferably 1350°C or higher. By melting at a temperature of 1300°C or higher, the valuable metal such as copper, cobalt, and nickel is efficiently melted, and the molten metal is formed in a state where fluidity is sufficiently enhanced. Therefore, the separation efficiency of the valuable metal and the impurity components in the slag separation step S5 described later can be improved. When the heating temperature is lower than 1300° C, the separation efficiency between the valuable metal and the impurities may be insufficient. The upper limit of the heating temperature in the melting treatment is preferably 1500°C or lower. When the heating temperature exceeds 1500°C, there is a possibility that thermal energy is wastefully consumed, and refractory materials such as the crucible and furnace wall consume too much, resulting in a decrease in productivity.

Moreover, when heating in the melting treatment, the flowability of the melt is low at a stage where the heating temperature has been reached and some of the discarded lithium ion batteries have not been completely melted. It is, therefore, necessary to maintain the heating temperature for at least 30 minutes, for example. Note that it is preferable to observe the inside of the crucible and ultimately confirm with a measuring rod whether or not the raw material has been completely molten. The molten metal and the slag having increased fluidity after melting are separated from each other as the metal in the lower layer and the slag in the upper layer in the crucible by their specific gravities. At this time, after the slag of the supernatant is also collected using a measuring rod, cooling and pulverizing treatment are performed.

It should be noted that in the melting treatment, dust, exhaust gas, or the like may be generated, but they can be made harmless by performing a conventionally known exhaust gas treatment.

### [Slag Separation Step]

In the slag separation step S5, the slag is separated from the reduced product obtained in the melting step S4, and a molten metal containing the valuable metal is recovered. As described above, since the slag and the molten metal, the reduced product, are separated due to differences in their specific gravities, the molten metal can be efficiently collected by separating the slag.

### [Oxidation Purification Step]

In the oxidation purification step S6, impurities such as manganese are oxidatively removed by subjecting the collected molten metal to an oxidative melting treatment to purify the molten metal. Specifically, the oxidative melting treatment is performed by heating the molten metal to a temperature at which the molten state of the molten metal is maintained, and by blowing an oxidizing agent such as air into the molten metal. Thereby, impurities such as manganese contained in the molten metal can be oxidized and effectively distributed to the slag, and thereby the metal can be purified.

Here, the method according to the present embodiment is characterized in that silicon dioxide (SiO₂) is added as a flux to the molten metal in the oxidation purification step S6 to perform the oxidative melting treatment, and at this time, SiO₂ is added such that the weight ratio of SiO₂/MnO in the slag to be produced is 0.4 or more and 1.0 or less.

As described above, with respect to the addition amount of SiO₂, when the addition amount is set such that the weight ratio of SiO₂/MnO is less than 0.4, the melting point of the generated slag increases. When the operating temperature is the same, the viscosity of the slag increases, and entrainment of the slag to the metal increases. Further, even when the addition amount of SiO₂ is set such that the weight ratio of SiO₂/MnO exceeds 1.0, the melting point of the slag produced similarly increases, and when the operating temperature is the same, the viscosity of the slag increases, and the entrainment of the slag to the metal increases. In addition, due to an increase in the amount of SiO₂ added as a flux, a use cost of the flux increases, or a slag treatment cost increases due to an increase in the amount of the slag.

By purifying the molten metal from which manganese, an impurity, is removed based on the oxidative melting treatment, it is possible to produce a MnO-SiO₂-based slag having a low melting temperature, and it is possible to suppress an increase in the viscosity of the slag. As a result, manganese can be effectively distributed to the slag, and metal entrainment into the slag can be reduced, preventing the recovery rate of valuable metal from decreasing.

### EXAMPLES

Hereinafter, Examples of the present invention will be described in more detail; however the present invention is not limited to the following Examples.

### <<Recovery Treatment of Valuable Metal (Examples and Comparative Examples>>

### (Discarded Battery Pretreatment Step)

As a product to be charged, including at least lithium, manganese, and a valuable metal, a raw material including discarded lithium ion batteries (18650 cylindrical batteries, used square batteries for vehicle use, and defective products collected in the battery production process) were prepared. Then, these discarded lithium ion batteries were collectively immersed in salt water and discharged, then moisture was blown off, and the batteries were roasted in the atmosphere at a temperature of 260°C to decompose and remove the electrolytic solution and the outer cases, and thereby battery contents were obtained.

### (Pulverizing Step)

Next, the battery contents were pulverized by a pulverizer (Good Cutter, manufactured by Ujiie Manufacturing Co., Ltd.) to obtain a pulverized product.

### (Preheating Step)

Next, the obtained pulverized product was charged into a rotary kiln and oxidatively roasted in the atmosphere at a preheating temperature of 800°C for 180 minutes.

### (Melting Step)

The pulverized product after the oxidative roasting was charged into an alumina crucible and subjected to a reductive melting treatment at a heating temperature (reduction temperature) of 1400°C. In the reductive melting treatment, calcium oxide as a flux was added to the pulverized product. In order to adjust the degrees of oxidation and reduction, graphite powder was added as a reducing agent and mixed. Further, in the reductive melting treatment, the pulverized product was heated to a heating temperature, using a resistance heating furnace, the melting state was confirmed with a measuring rod, and the molten state was kept for 40 minutes.

### (Slag Separation Step)

With respect to the reduced product of the molten metal and the slag obtained by the reductive melting treatment, the slag was separated by utilizing differences in their specific gravities, and the molten metal was recovered.

### (Oxidation Purification Step)

Next, the recovered molten metal was subjected to an oxidative melting treatment to oxidatively remove manganese, an impurity, to purify the molten metal. In the oxidative melting treatment, SiO₂ was added as a flux to the molten metal.

Specifically, SiO₂ was added in an addition amount such that the weight ratio of SiO₂/MnO in the slag produced by the oxidative melting was as shown in Table 1 below in each test. Further, in the oxidative melting treatment, a crucible composed of a MgO Tammann tube having an outer diameter of 40 mm, an inner diameter of 34 mm, and a height of 150 mm was used. The molten metal charged into this crucible was heated at a temperature of 1400°C, an alumina pipe having an inner diameter of 5 mm and an outer diameter of 8 mm was inserted into the molten metal, and manganese was oxidatively removed by blowing air through the alumina pipe at a flow rate of 0.72 L/min for 80 minutes. The amount of the air was appropriately adjusted so that the molten metal would not scatter.

### <<Results>>

Table 1 below shows results of manganese (Mn) grade in the metal obtained in each test and the recovery rate of the valuable metal (Ni-Co-Cu alloy). The recovery rate of a valuable metal refers to a percentage of an amount of the valuable metal (Ni-Co-Cu metal) obtained after the treatment of the oxidative purification step with respect to an amount of the valuable metal (Ni-Co-Cu metal) input in the treatment.

**[Table 1]**

| Test | SiO₂/MnO weight ratio | Metal amount | Added amount of SiO₂ | Mn grade in the metal obtained | Ni-Co-Cu metal recovery rate |
|---|---|---|---|---|---|
| | | (g) | (g) | (%by mass) | (%) |
| Example 1 | 1.0 | 370 | 39 | 0.04 | 99.9 |
| Example 2 | 0.45 | 370 | 18 | 0.05 | 99.9 |
| Comparative Example 1 | 0 | 370 | 0 | 0.05 | 92.6 |
| Comparative Example 2 | 1.5 | 370 | 59 | 0.05 | 92.6 |
| Comparative Example 3 | 0.2 | 370 | 8 | 0.05 | 95.8 |

As shown in Table 1, in Examples 1 and 2 in which SiO₂ was added so that the weight ratio of SiO₂/MnO in the slag produced in the oxidative purification step was 1.0 and 0.45, respectively, the recovery rates of the obtained Ni-Co-Cu metals were the highest while manganese grades in the molten metals were decreased.

On the other hand, in Comparative Example 1 in which SiO₂ was not added as a flux and Comparative Examples 2 and 3 in which SiO₂ was added such that the weight ratio of SiO₂/MnO in the slag was in the range of less than 0.4 or more than 1.0, the viscosity of each purified slag increased, the metal was entrained in the slag, and the recovery rate of the obtained Ni-Co-Cu alloy decreased.

## Claims

1. A method of producing a valuable metal from a raw material containing at least lithium, manganese, and a valuable metal, the method comprising:
a reductive melting step of subjecting the raw material to a reductive melting treatment to obtain a reduced product containing: a slag and a molten metal containing the valuable metal;
a slag separation step of recovering the molten metal from the reduced product; and
an oxidative purification step of adding silicon dioxide (SiO₂) as a flux to the recovered molten metal and subjecting a resulting mixture to an oxidative melting treatment,
wherein SiO₂ is added in the oxidative melting treatment as a flux such that a weight ratio of SiO₂/MnO in a slag is 0.4 or more and 1.0 or less.

2. The method of producing a valuable metal according to claim 1,
wherein a manganese content contained in the raw material is 15% by mass or less.

3. The method of producing a valuable metal according to claim 1 or 2, further comprising a preheating step of heating and oxidatively roasting the raw material,
wherein, in the reductive melting step, a raw material after the oxidative roasting is subjected to the reductive melting treatment.

4. The method of producing a valuable metal according to any one of claims 1 to 3,
wherein the raw material includes a discarded lithium ion battery.
